# EUROPEAN PATENT SPECIFICATION

(11) **EP 2 829 356 B1**
(45) Date of publication and mention of the grant of the patent: **16.03.2016**
(21) Application number: 14002378.9
(22) Date of filing: 10.07.2014
(51) Int. Cl.: B23Q 3/08, B23Q 1/03, B23Q 3/10, B23Q 17/22, G05B 19/4097, B26D 3/10

(54) **System for positioning, identifying and working a semi-finished component**
System zur Positionierung, Identifizierung und Bearbeitung einer halbfertigen Komponente
Système de positionnement, identification et travail d'un composant semi-fini

(30) Priority: 24.07.2013 IT TO20130626
(43) Date of publication of application: 28.01.2015
(73) Proprietor: Persico S.p.A., 24027 Nembro (BG) (IT)
(72) Inventor: Ambrosini, Paolo, I-24027 Nembro (BG) (IT)
(74) Representative: Garavelli, Paolo

(56) References cited:
- EP-A1- 1 980 376
- WO-A1-2013/104741
- WO-A2-2005/042204
- DE-A1- 19 747 027

## Description

The present invention refers to a system for positioning, identifying and working a semi-finished component. In particular, the invention deals with the use of a universal template for managing the preparation of the passenger compartment of a vehicle or a car.

As known, a semi-finished component of the passenger comparment of a car such as, for example, a panel, a roof panel or ceiling, is subjected to finishing workings such as, for example, performing breakings for housing handles or sensors.

The introduction of safety systems in the car sector increases the need of differentiating the preparation of electric and electro-optical systems placed next to panels of the motor vehicle passenger comparment, above all next to the roof panel or ceiling. This implies a different organization of finishing works of those passenger comparment components used for housing miniaturized sensors, such as videocameras and radars, namely sensors capable of reconstructing the environment in which the motor vehicle is immersed.

The reconstruction of such environment is performed through the continuous acquisition of images and electro-optical signals by means of sensors placed next to the point of view of the vehicle's driver. To this end, a roof panel or ceiling of a car must also house and support sensors such as an infrared videocamera for night vision, a stereo-videocamera for determining the distance from obstacles, and other types of electro-optical sensors.

The connection of motor vehicles through an internet network has also a further impact on the production process of components placed in the car passenger comparment. For example, the control dashboard must house telephone connections and hand-held apparatuses connected to the computer on board the vehicle.

The need of differentiating the configuration of electro-optical sensors to comply with safety requirements of various nature and appearance, creates problems for the organization and logistics of finishing works of the panels in the passenger comparment.

A managing problem of a customized cutting program for each semi-finished roof panel for a car, is given by the steps of identifying and supporting the roof panel when cutting the breakages.

The finishing work of a roof panel is usually performed through a single tool ("*ecocut*"), according to a certain cutting program, depending on the relationship between a certan space geometry of the semi-finished roof panel and a certain set of breakages whose shape and position are defined.

Usually, a semi-finished roof panel is flexible and can be easily deformed under its own weight. This implies the support and locking of the roof panel by means of a template reproducing the negative outline of the roof panel.

Document WO-A1-2013/104741 discloses a positioning, identifying and working system according to the preamble of Claim 1.

Object of the present invention is solving the above prior-art problems, by providing a system for supporting a semi-finished component which allows identifying and working the component itself.

Moreover, an object of the present invention is providing a system for supporting a semi-finished component, of the type in which a controller manages the works depending on the identification of the component, and in which the identification of the component is embedded in its positioning, comprising a universal template for permanently positioning the component.

Another object of the present invention is providing a system for supporting a semi-finished component which is universal to be able to be suited to any space outline, with a simple execution and reduced costs.

The above and other objects and advantages of the invention, as will appear from the following description, are obtained by a system for positioning, identifying and working a semi-finished component as claimed in Claim 1. Preferred embodiments and non-trivial variations of the present invention are the subject matter of the dependent Claims.

It is intended that all enclosed claims are an integral part of the present disclosure.

It will be immediately obvious that numerous variations and modifications (for example related to shape, sizes, arrangements and parts with equivalent functionality) could be made to what is described, without departing from the scope of the invention as appears from the enclosed claims.

The present invention will be better described by some preferred embodiments thereof, given as a non-limiting example, with reference to the enclosed drawings, in which:
- Figure 1 shows a top perspective view of a roof panel equipped with breakages, as a type of semi-finished component treated in the present invention;
- Figure 2 shows an enlarged portion of a part of the component of Figure 1;
- Figure 3 shows a top perspective view of the roof panel of Figure supported by a universal template of the system according to the present invention;
- Figure 4 shows a top perspective view of the universal template of the system according to the present invention;
- Figure 5 shows an enlarged portion of a part of the template of Figure 4;
- Figures 6 and 7 respectively show a top perspective and a plan view of a component belonging to the universal template of Figure 4; and
- Figure 8 shows a sectional view along line VIII-VIII of the component of Figure 7.

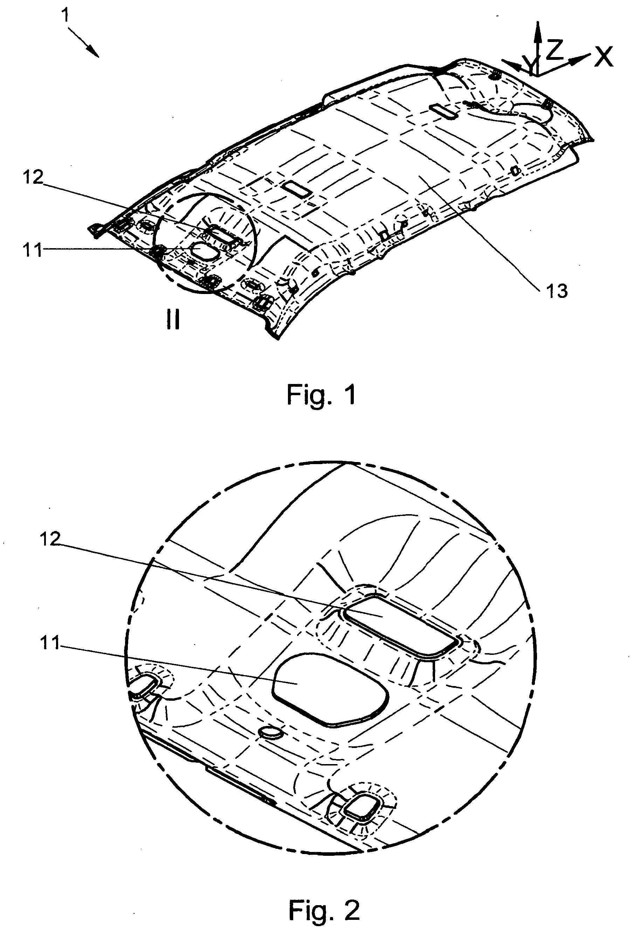

With reference to the Figures, it is possible to note that a semi-finished component 1, such as for example a roof panel, can be a thin sheet in a three-dimensional space X, Y, Z, of a uniform thickness, delimited by an approximately rectangular edge in a plane X, Y, of a curvilinear, concave shape, projecting along the direction of axis Z, such concave shape providing a certain structural stiffening of the semi-finished component 1 itself (as shown, in particular, in Figure 1).

In particular, a roof panel is a semi-finished component 1 to be subjected to a certain working cycle, namely the making of several breakages 11, 12 (as shown, in particular, in Figures 1 and 2).

The space geometries of the semi-finished component 1, and in particular of a roof panel, and of each breakage 11, 12, are related to a certain working cycle managed by a controller (not shown). The controller is connected to a position detector (not shown) and to a robot (not shown), respectively used for detecting the outline of the semi-finished component 1, and in particular of the roof panel, and for performing the cut to obtain the breakages 11, 12.

In particular, a position detector, such as for example a Contactless Position Detector (CPD) device, allows determining the position in space, generating a rotation-translation matrix with respect to a theoretical reference system, which is sent to the robot to re-align its cutting path.

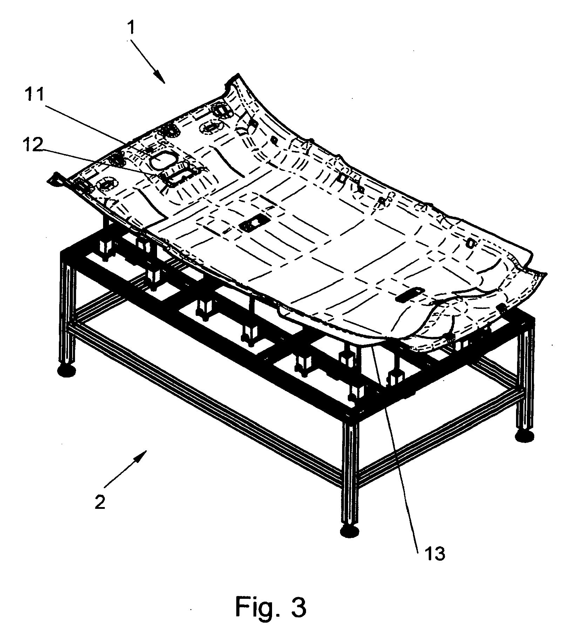

The operation of the position detector and of the cutting robot is based on a positioning, through an operator or an automatic handling system (not shown), of at least one semi-finished component 1, and in particular of the roof panel, on at least one template 2 (as shown, in particular, in Figure 3). The template 2 allows positioning and keeping in position the semi-finished component 1, and in particular the roof panel.

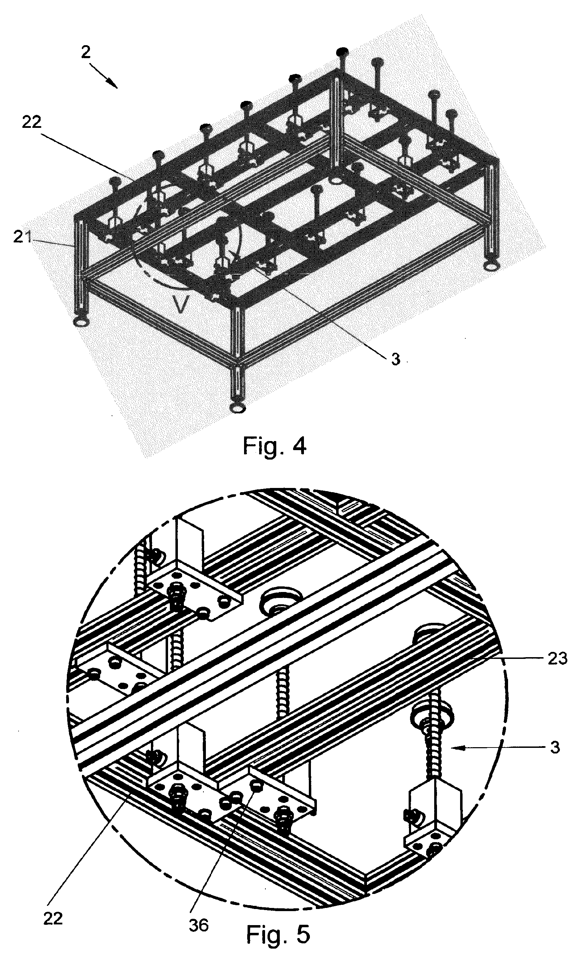

With reference to Figures 4 and 5, it is possible to note that the template 2 is composed of a structure of assembled extruded aluminium parts 21, fastened to a floor (not shown), and an arrangement of rods 22.

Sliding along the rods 22, apparatuses 3 are fastened, equipped with suction cups, in a number which changes depending on the level of difficulty to stably support the geometry of the semi-finished component 1, and in particular of the roof panel.

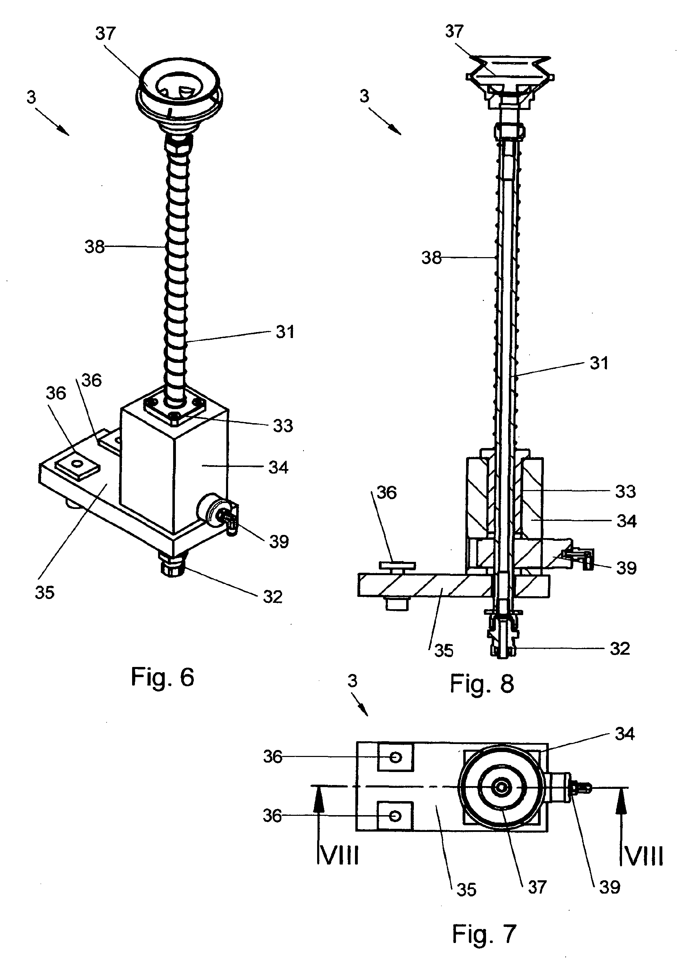

With reference to Figures 6, 7 and 8, each apparatus 3 is composed of at least one hollow cylinder 31, connected to a vacuum plant (not shown) by means of a quick assembly fitting 32, sliding with respect to a flanged sleeve 33 of the ball-recirculation type, fastened to a fixed prism-shaped block 34.

The apparatus 3 is fastened to a rod 22 of the template 2 by means of a flange 35, made of the same piece with the block 34, equipped with a pair of quick connection elements 36 along grooves 23 of the respective rod 22 (as shown, in particular, in Figure 5).

The apparatus 3 is connected (as shown, in particular, in Figure 3) to a surface 13 of the semi-finished component 1, and in particular of the roof panel, by means of at least one suction cup 37 screwed to an end of the hollow cylinder 31. In particular, each suction cup 37 is made of silicone, shaped as a bellows to allow adapting it to the curvature of the surface 13 of the semi-finished component 1, and in particular of the roof panel.

A compression spring 38, of a loosened stiffness, allows sliding of the hollow cylinder 31 along the sleeve 33 till a balance position is reached with the portion of weight of the semi-finished component 1, and in particular of the roof panel, and returning to its starting position once having removed the semi-finished component 1 itself.

A locking pin 39, supported by the prism 34, allows locking the hollow cylinder 31. The lock, of a spring type, occurs with its operating direction on both sides, unlocking being of the compressed air type.

The template 2, equipped with the apparatuses 3, therefore allows positioning and keeping in position the semi-finished component 1, and in particular the roof panel.

A three-dimensional measure of the semi-finished component 1, and in particular of the roof panel, with a position detector, such as a Contactless Position Detector (CPD) device, placed at a certain distance from the bed composed of the plurality of systems of suction cups 37 of the apparatuses 3, is performed after having positioned the semi-finished component 1, and in particular the roof panel, on the bed of systems of suction cups 37 of the apparatuses 3.

The semi-finished component 1 therefore distorts the spring 38 of each apparatus 3. In this way, the bed of suction cups 37 composing the universal template 2 assumes a balanced configuration due to the sliding of each hollow cylinder 31 inside the ball-recirculation sleeve 33. The intrinsic elastic stiffnessa of the semi-finished component 1, and in particular of the roof panel, avoids modifying the curvature of the semi-finished component 1 supported by the bed of suction cups 37 on their respective springs 38.

The geometric configuration given to the bed of suction cups 37 is made permanent through the intervention of the bed of locking pins 39, after a manual command or automatically managed by the system controller.

The same system controller controls the vacuum formation along each hollow cylinder 31, as warranty of an adherence between each suction cup 37 and the portion of surface 13 of the semi-finished component 1, and in particular of the roof panel.

The position detector performs the three-dimensional scanning, for example through a laser outline-meter, with a triangulation system of the optical beam, which is the measuring system resulted most efficient from tests performed by the Applicant on different car ceilings.

In particular, this technique has been proven reliable both on surfaces with different roughness, and on surfaces with different colors, very dark surfaces needing the use of lasers with higher powers. The recording algorithms were efficient both when using models obtained from previous scans, and when using models obtained from CAD drawings, and has also shown an execution speed compatible with the loading-unloading operations of the cutting machine.

The system controller correlates the detected geometry with the position detector in a certain working cycle which is performed through a robot equipped with a single tool ("*ecocut*").

A position detector, in particular of the Contactless Position Detector (CPD) type, allows performing the following operations:
- geometric identification (object recognition);
- position identification in space with respect to a reference system (mandatory for performing operations on the workpiece itself);
- identification of workpiece distortions and following compensation.

## Claims

1. System for positioning, identifying and working at least one semi-finished component (1), of the type in which a controller manages a working depending on an identification of said component (1), and wherein said identification of said component (1) is embedded in the positioning of said component (1), said system comprising at least one universal template (2) for permanently positioning said component (1), **characterized in that** said universal template (2) is connected to said component (1) by means of a plurality of suction cups (37) supported by compression springs (38) which, by being compressed, allow a positioning of said component (1), each of said suction cups (37) being fastened to at least one hollow cylinder (31), connected to a vacuum plant and sliding with respect to a prism-shaped fixed block (34).

2. System for positioning, identifying and working a semi-finished component (1) according to the previous claim, **characterized in that** a locking pin (39), suppoted by said prism-shaped fixed block (34), by acting on said hollow cylinder (31), makes said positioning of said component (1) permanent.

3. System for positioning, identifying and working a semi-finished component (1) according to claim 2, **characterized in that**, following a measure of a space geometry of said component (1), said system controller performs said identification of said component (1).

4. System for positioning, identifying and working a semi-finished component (1) according to the previous claim, **characterized in that** a laser outline-meter performs said measure of said space geometry of said component (1) by means of a three-dimensional scanning with a triangulating system of the optical beam.

5. System for positioning, identifying and working a semi-finished component (1) according to claim 2, **characterized in that**, following said identification of said component (1), said system controller is able to perform said working of said component (1).

6. System for positioning, identifying and working a semi-finished component (1) according to the previous claim, **characterized in that** a robot equipped with a single tool performs a cutting of said component (1).

7. System for positioning, identifying and working a semi-finished component (1) according to claim 3, **characterized in that** it comprises at least one Contactless Position Detector, CPD, device adapted to perform said measure of said space geometry of said component (1) to determine a space position, generating a rotation-translation matrix with respect to a theoretical reference system, which is sent to a robot for re-aligning its cutting path.

8. System for positioning, identifying and working a semi-finished component (1) according to claim 7, **characterized in that** it comprises at least one position detector, in particular said Contactless Position Detector, CPD, adapted to perform the operations of geometric identification, identification of said space position with respect to said reference system, identification of the distortions of said component (1) and following compensation.

## Patentansprüche

1. Positionierungs-, Erkennungs- und Bearbeitungssystem von mindestens einem Halbfertigteil (1), wo eine Kontrolleinheit eine Bearbeitung aufgrund einer Erkennung des genannten Teils (1) steuert und wo die genannte Erkennung des genannten Teils (1) in der Positionierung des genannten Teils (1) enthalten ist, das genannte System schließt mindestens eine Universal-Schablone (2) für die permanente Positionierung des genannten Teils (1) ein und ist **dadurch gekennzeichnet, dass** die genannte Universal-Schablone (2) mit dem genannten Teil (1) durch mehrere Saugköpfe (37) verbunden ist, die durch Kompressionsfedern (38) gehalten werden, welche durch die Kompression eine Positionierung des genannten Teils (1) ermöglichen, jeder der genannten Saugköpfe (37) ist an mindestens einem Hohlzylinder (31) befestigt, der mit einer Vakuumanlage verbunden ist und gegenüber einem festen Prismenblock (34) verschiebbar ist.

2. Positionierungs-, Erkennungs- und Bearbeitungssystem von mindestens einem Halbfertigteil (1) gemäß dem vorhergehenden Patentanspruch, das **dadurch gekennzeichnet ist, dass** ein Sperrbolzen (39), der durch den genannten festen Prismenblock (34) gehalten wird, die genannte Positionierung des genannten Teils (1) durch Einwirken auf den genannten Hohlzylinder (31) permanent gestaltet.

3. Positionierungs-, Erkennungs- und Bearbeitungssystem von mindestens einem Halbfertigteil (1) gemäß Patentanspruch 2, das **dadurch gekennzeichnet ist, dass** die genannte Kontrolleinheit des genannten Systems die genannte Erkennung des genannten Teils (1) infolge einer Erfassung einer Raumgeometrie des genannten Teils (1) ausführt.

4. Positionierungs-, Erkennungs- und Bearbeitungssystem von mindestens einem Halbfertigteil (1) gemäß dem vorhergehenden Patentanspruch, das **dadurch gekennzeichnet ist, dass** ein Laserprofilmesser die genannte Erfassung der genannten Raumgeometrie des genannten Teils (1) durch die dreidimensionale Abtastung mit einem Triangulationssystem des optischen Strahls ausführt.

5. Positionierungs-, Erkennungs- und Bearbeitungssystem von mindestens einem Halbfertigteil (1) gemäß Patentanspruch 2, das **dadurch gekennzeichnet ist, dass** die genannte Kontrolleinheit (1) des genannten Systems die genannte Bearbeitung des genannten Teils (1) infolge der genannten Erkennung des genannten Teils (1) ausführen kann.

6. Positionierungs-, Erkennungs- und Bearbeitungssystem von mindestens einem Halbfertigteil (1) gemäß dem vorhergehenden Patentanspruch, das **dadurch gekennzeichnet ist, dass** ein Roboter, der nur mit einem Werkzeug ausgestattet ist, einen Schnitt des genannten Teils (1) ausführt.

7. Positionierungs-, Erkennungs- und Bearbeitungssystem von mindestens einem Halbfertigteil (1) gemäß Patentanspruch 3, das **dadurch gekennzeichnet ist, dass** es mindestens einen kontaktlosen Positionsdetektor, CPC (*"contactless position detector*"), einschließt, der dazu dient, die genannte Erfassung der genannten Raumgeometrie des genannten Teils (1) auszuführen, um eine Position im Raum zu bestimmen, indem eine Matrize der Drehverschiebung gegenüber einem theoretischen Bezugssystem erzeugt wird, die an einen Roboter gesendet wird, um seinen Schnittweg wieder auszurichten.

8. Positionierungs-, Erkennungs- und Bearbeitungssystem von mindestens einem Halbfertigteil (1) gemäß Patentanspruch 7, das **dadurch gekennzeichnet ist, dass** es mindestens einen Positionsdetektor einschließt, insbesondere den genannten kontaktlosen Positionsdetektor CPD, der dazu dient, die Verfahren der geometrischen Erkennung, der Erkennung der genannten Position im Raum gegenüber dem genannten Bezugssystem, der Erkennung der Verformungen des genannten Teils (1) und des darauf folgenden Ausgleichs auszuführen.

## Revendications

1. Système de positionnement, d'identification et d'usinage d'un composant semi-fini (1) au moins, où un contrôleur gère l'usinage en fonction de l'identification du composant (1) et où cette dernière est inhérente au positionnement du composant (1) ; ce système comprend au moins un gabarit universel (2) pour positionner de manière permanente le composant (1), **caractérisé en ce que** le gabarit universel (2) est relié au composant (1) par une pluralité de ventouses (37) soutenues par des ressorts à compression (38) qui, en se comprimant, permettent le positionnement du composant (1) ; chaque ventouse (37) est fixée au moins à un cylindre creux (31), relié à un système de vide et coulissant par rapport à un bloc fixe prismatique (34).

2. Système de positionnement, d'identification et d'usinage d'un composant semi-fini (1), selon la revendication précédente, **caractérisé en ce qu'**un pivot de blocage (39), soutenu par le bloc fixe prismatique (34), en agissant sur le cylindre creux (31), rend permanent le positionnement du composant (1).

3. Système de positionnement, d'identification et d'usinage d'un composant semi-fini (1), selon la revendication 2, **caractérisé en ce que**, après le relevé d'une géométrie spatiale du composant (1), le contrôleur du système exécute l'identification du composant (1).

4. Système de positionnement, d'identification et d'usinage d'un composant semi-fini (1), selon la revendication précédente, **caractérisé en ce qu'**un profilomètre laser exécute le relevé de la géométrie spatiale du composant (1) à travers un balayage tridimensionnel avec un système de triangulation du faisceau optique.

5. Système de positionnement, d'identification et d'usinage d'un composant semi-fini (1), selon la revendication 2, **caractérisé en ce que**, après l'identification du composant (1), le contrôleur du système est en mesure d'exécuter l'usinage du composant (1).

6. Système de positionnement, d'identification et d'usinage d'un composant semi-fini (1), selon la revendication précédente, **caractérisé en ce qu'**un robot doté d'un seul outil exécute la découpe du composant (1).

7. Système de positionnement, d'identification et d'usinage d'un composant semi-fini (1), selon la revendication 3, **caractérisé en ce qu'**il comprend au moins un détecteur de position sans contacts, CPD ("*contactless position detector*"), en mesure de relever la géométrie spatiale du composant (1) pour déterminer une position dans l'espace, en engendrant une matrice de roto-translation par rapport à un système de référence théorique qui est envoyée à un robot pour réaligner le parcours de découpe.

8. Système de positionnement, d'identification et d'usinage d'un composant semi-fini (1), selon la revendication 7, **caractérisé en ce qu'**il comprend au moins un détecteur de position sans contacts (CPD) en mesure d'exécuter les opérations d'identification géométrique, d'identification de la position dans l'espace par rapport au système de référence, d'identification des déformations du composant (1) et de compensation conséquente.
